(19) Europäisches Patentamt
European Patent Office
Office européen des brevets

(11) Publication number: 0 100 113
B1

(12) # EUROPEAN PATENT SPECIFICATION

(45) Date of publication of patent specification: 21.01.87

(51) Int. Cl.$^4$: C 08 L 27/06

(21) Application number: 83200983.1

(22) Date of filing: 01.07.83

(54) **Stabilizer composition for stabilizing polymers or copolymers of vinyl chloride.**

(30) Priority: 21.07.82 NL 8202933

(43) Date of publication of application:
08.02.84 Bulletin 84/06

(45) Publication of the grant of the patent:
21.01.87 Bulletin 87/04

(84) Designated Contracting States:
DE FR GB IT

(56) References cited:
FR-A-1 163 944
FR-A-1 184 545
FR-A-2 392 074

(73) Proprietor: AKZO N.V.
Velperweg 76
NL-6824 BM Arnhem (NL)

(72) Inventor: Burley, Joseph William
50 Renfrew Avenue Laffak
St. Helens Lancashire (GB)

(74) Representative: Sieders, René et al
P.O. Box 314
NL-6800 AH Arnhem (NL)

EP 0 100 113 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The invention relates to a stabilizer composition for stabilizing polymers or copolymers of vinyl chloride comprising a mixture of

(a) an organotin compound or an antimony mercaptide, and

(b) a synergistic amount of a compound derived from barium and a thiocarboxylic acid of the formula HSC ($R_1$) ($R_2$) COOH, where $R_1$ represents a H-atom or a methyl group and $R_2$ represents a H-atom or a substituted or unsubstituted alkyl group having from 1 to 18 carbon atoms, a cycloalkyl group having 3 to 6 carbon atoms or a phenyl group,

and to polymers or copolymers of vinyl chloride containing a stabilizing amount of said composition, and to shaped articles that are entirely or partly formed of these stabilized polymers.

Stabilizer compositions of the type indicated above are described in United States Patent Specification 4 115 352. Over previous systems they have the advantage that the same results may be obtained while adding a smaller amount of tin or antimony compounds, which may lead to a substantially reduced cost.

Surprisingly, it has been found that the proportion of organotin and antimony compounds to be used may still be reduced considerably by using a stabilizer composition according to the invention.

The invention consists in that in a stabilizer composition of the known type mentioned in the opening paragraph, compound (b) is the barium bisthiocarboxylate of said acid.

It has been found that a stabilizer composition having even better properties may be obtained if in addition to compound (b) it contains an amount of barium S,O-thiocarboxylate of said acid and which acts in synergism therewith.

The ratio between the two barium compounds is so chosen then that the molar ratio of thiocarboxylate to barium is at least 1,3.

Optimum results are found to be obtained at a molar ratio of thiocarboxylate to barium in the range of 1,5 to 1,7.

Preparation of the synergistic compound (b) according to the invention is done in the manner known from the literature.

To that end for instance a thiocarboxylic acid of the above formula is reacted with barium oxide, hydroxide or alkoxide in an appropriate solvent.

As the reaction is quantitative, also all kinds of mixtures of barium bisthiocarboxylate and barium S,O-thiocarboxylate may be prepared by varying the molar ratio of barium to the thiocarboxylic acid.

It has been found that generally favourable results may be obtained if the organotin compound corresponds to the formula:

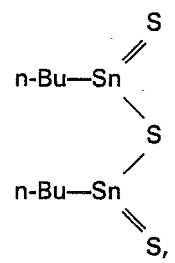

$R_x$—Sn—$Z_{(4-x)}$, where x is 1 or 2, Z represents —$S(CH_2)_nCOOR^*$ where n = 1 or 2,

$$-O\underset{\underset{O}{\|}}{C}CH{=}CH\underset{\underset{O}{\|}}{C}-OR^*, -O\underset{\underset{O}{\|}}{C}R \text{ or } -SR,$$

or $R_2$—Sn = Z* wherein Z* is

$$-O-, -O\underset{\underset{O}{\|}}{C}CH{=}CH\underset{\underset{O}{\|}}{C}O-, -S-, \text{ or } -S(CH_2)_2COO-,$$

where R represents an alkyl, cycloalkyl, aryl or mixed alkyl-aryl group having not more than 18 carbon atoms which may be substituted or not with one or more of the following groups:

$$-OH, -CN, -OR^*, -\overset{\overset{O}{\|}}{C}R^*, \text{ or } -COOR^*,$$

where R* represents an alkyl, cycloalkyl, aryl or mixed alkyl-aryl group having not more than 18 carbon atoms.

Especially good results have been obtained with mixtures of organotin compounds of the formula $RSnZ_3$ and $R_2SnZ_2$.

Examples of suitable organotin compounds of the above group include: dibutyltin bis(2,4,4-trimethylpentyl thioglycolate), di-n-octyltin bis(2,4,4-trimethyl-mercaptopropionate), dimethyltin bis(laurylmercaptide), di-n-butyltin bis(methylmaleate), di-n-butyltindilaurate, di-n-butyltinmaleate, mono-n-butyltin tris(2,4,4-trimethylpentyl thioglycolate), mono-n-octyltin dithioglycolate and di-n-butyltin bis(ethyleneglycol-thioglycolate).

Another group of organotin compounds that may advantageously be used in the stabilizer compositions of the present invention is formed by organotin compounds that correspond to any one of the following formulae:

(I)

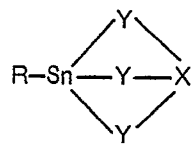

(II)

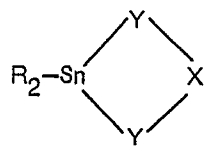

(III)

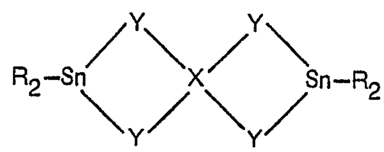

(IV)

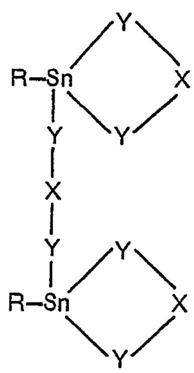

wherein R represents an alkyl group, a cycloalkyl group, an aryl group, an aralkyl group or an alkaryl group having not more than 18 carbon atoms, Y represents oxygen or sulphur and X is the rest of a polyol or polyhydric phenol having 2 to 6 hydroxyl group after removal of one or more hydroxyl groups, R being substituted or not with one or more of the following groups:

$$—OH,\ —CN,\ —OR^*,\ —\overset{\overset{O}{\|}}{C}R^*,\ \text{or}\ —COOR^*,$$

where R* represents an alkyl, cycloalkyl, aryl or mixed alkyl-aryl group having not more than 18 carbon atoms.

This last-mentioned group of organotin compounds includes, for example:

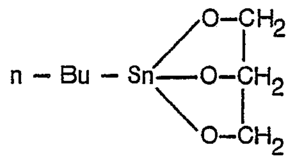 , 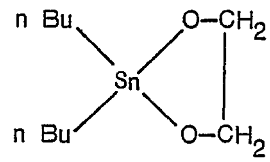 ,

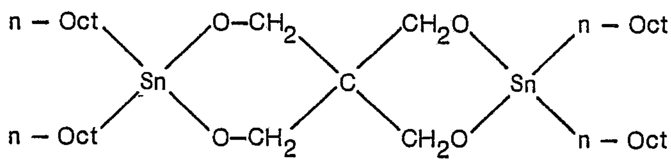

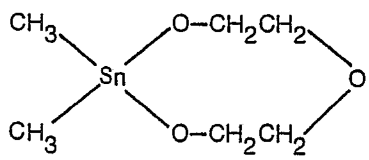 , 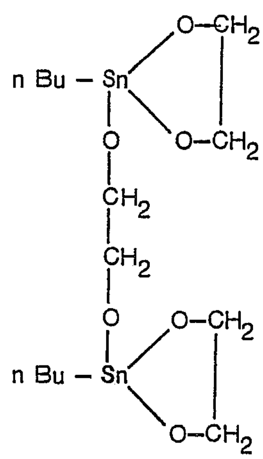

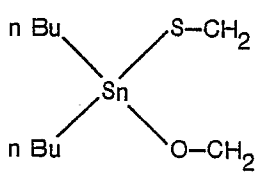 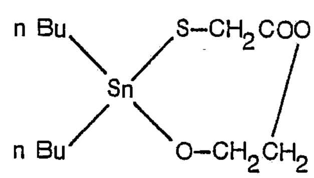

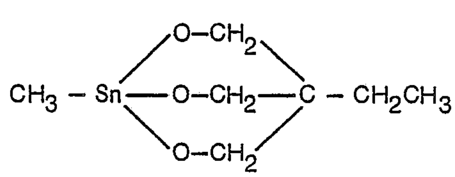 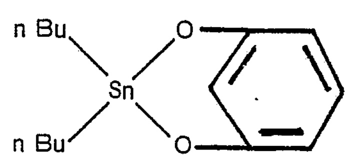 and

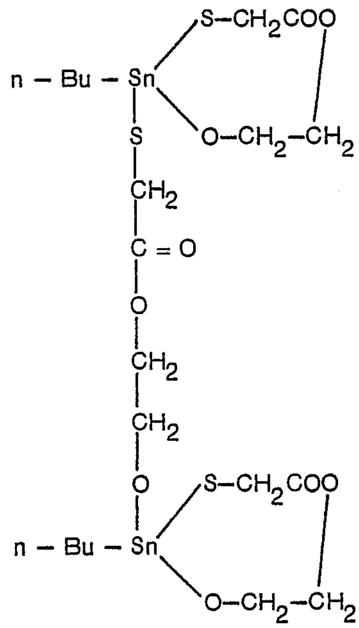

A particularly preferred group of organotin compounds satisfies the formula

$$\left(R_1O-\overset{\overset{\displaystyle O}{\|}}{C}-CH_2CH_2\right)_n \quad Sn\ X_{4-n'}$$

where n = 1 or 2 and $R_1$ represents an alkyl group having 1 to 18 carbon atoms, which may be substituted or not with an alkoxy group, having 1 to 18 carbon atoms, a polyoxyalkylene group consisting of oxyalkylene groups having 1—4 carbon atoms and as terminal group alkyl or a hydrogen atom, a cycloalkyl group having 3 to 6 carbon atoms, an alkenyl group having 2 to 4 carbon atoms, or a phenyl group, and where X stands for $\frac{1}{2}$ S, $—SR_2$, $—S(CH_2)_mCOOR_3$,

$$—O—\underset{\underset{\displaystyle O}{\|}}{C}—CH{=}CH\underset{\underset{\displaystyle O}{\|}}{C}—OR_3,\ —O—\underset{\underset{\displaystyle O}{\|}}{C}—R_3 \text{ or } —S(CH_2)_2OCO\ R_3,$$

where m = 1 or 2 and $R_2$ represents an unsubstituted or substituted alkyl, cycloalkyl, aryl, alkaryl or aralkyl group and $R_3$ has the meaning of an unsubstituted or substituted alkyl, alkenyl, aryl, alkaryl or aralkyl group, with the proviso that n = 2 when X = $\frac{1}{2}$ S.

Examples of suitable groups for $R_1$ are: methyl, ethyl, propyl, n-butyl and octadecyl. As examples of polyoxyalkylene groups consisting of oxyalkylene groups having 1 to 4 carbon atoms and as terminal group an alkyl group or a hydrogen atom may be mentioned ethoxyethyl and n-butoxyethyl-oxy-ethyl. An example of a cycloalkyl group is cyclohexyl. An example of an alkenyl group having 2 to 4 carbon atoms is allyl. The estertin compounds that are particularly suitable for use in a stabilizer composition according to the present invention are derived from tetravalent tin and comprise mercaptides of the following formula:

$$(R_1O\overset{\overset{\displaystyle O}{\|}}{C}—CH_2CH_2)_n\ Sn\ (S\ R_2)_{4-n}$$

where $R_2$ represents an unsubstituted or substituted alkyl, cycloalkyl, aryl, alkaryl or aralkyl group. Examples of these alkyl groups are: ethyl, propyl, butyl, octyl, nonyl, lauryl and octadecyl; aryl, alkaryl and aralkyl groups such as phenyl, benzyl, naphthyl, xylyl or phenyl ethyl. The group S $R_2$, for instance, may represent a mercaptan or mercapto alcohol group. As mentioned before, the group S $R_2$ may be an aliphatic or an aromatic mercaptan. In the case of an aliphatic mercaptan preference is given to compounds having 8 to 18 carbon atoms, such as decyl mercaptan or dodecyl mercaptan. The lower mercaptans are unsuitable for the preparation of stabilizers because of their strong smell.

Examples of suitable aromatic mercaptans include thionaphthol, thiobenzyl alcohol and phenoxyethyl mercaptan. Examples of suitable mercapto alcohols include monothioethylene glycol, monothiopropylene glycol, thioglycerol and thiodiethylene glycol. Examples of these estertin mercaptides include bis(2-methoxycarbonylethyl)tin dibenzyl mercaptide and 2-lauroxycarbonyl ethyl tin trioctyl mercaptide.

British Patent Specification No. 1 502 073 describes estertin compounds of the formula:

$$(R_1-O-\overset{O}{\overset{\|}{C}}-CH_2CH_2)_n\ Sn\ (S\ R_2)_{4-n}.$$

Also sulphur-containing estertin compounds other than the estertin mercaptides of the above formula are suitable for use in a stabilizer composition according to the present invention.

Examples of such compounds are the estertin mercapto acid esters of the formula:

$$(R_1-O-\overset{O}{\overset{\|}{C}}-CH_2CH_2)_n\ Sn\ (S-(CH_2)_m-COO\ R_3)_{4-n}$$

wherein m = 1 or 2 and $R_3$ represents an unsubstituted alkyl, alkenyl, aryl, alkaryl or aralkyl group. The sulphur-containing group can therefore be derived from mercaptoacetic acid or β-mercaptopropionic acid and octanols, such as 2-ethylhexanol, decanols, glycerol, glycol monoesters, dihydroabietyl alcohol, phenoxy ethanol or pentaerythritol. Examples of these estertin mercaptides include: bis(2-butoxycarbonyl-ethyl)tin bis(isooctylthioglycolate), bis(2-butoxy-ethyloxyethyloxycarbonylethyl)tin bis(octadecyl-β-mercaptopropionate) and 2-butoxycarbonyl-ethyltin tris(laurylthioglycolate). Other suitable estertin compounds may be represented by the formula:

$$(R_1-O\overset{O}{\overset{\|}{C}}-CH_2CH_2)_n\ Sn\ (S(CH_2)_2-O-CO-R_3)_{4-n},$$

wherein $R_3$ has the above-mentioned meaning. Particularly, preference is given to estertin mercaptides derived from the esters of mercapto acids obtained by reacting thioglycol with an aliphatic, aromatic or alicyclic, saturated or unsaturated carboxylic acid. As example of such an estertin mercaptide may be mentioned bis(2-n-butoxycarbonylethyl)tin bis(2-mercapto-ethyloleate).

Another group of sulphur-containing estertin compounds that are suitable for use in a stabilizer composition according to the present invention may be represented by the formula:

$$(R_1-O-\overset{O}{\overset{\|}{C}}-CH_2CH_2)_2\ Sn\ S,$$

wherein $R_1$ has the above-mentioned meaning.

As examples may be mentioned: bis(2-n-butoxycarbonylethyl)tin sulphide, bis(2-phenoxycarbonyl-ethyl)tin sulphide, bis(2-octadecyloxycarbonylethyl)tin sulphide and bis(2-butoxyethyloxyethyloxy-carbonylethyl)tin sulphide.

The antimony compounds to be used in the stabilizer compositions of the present invention correspond to the formula: Sb $X_3$, where X has the meaning of sulphur, $SR_1$ or $SR_3COOR_2$, wherein $R_1$ and $R_2$ have the meaning of an alkyl, alkenyl, alkynyl, aryl, cycloalkyl, cycloalkenyl or mixed aryl-alkyl group having not more than 18 carbon atoms, which may optionally still be substituted with a halogen atom or a

$$-O\overset{O}{\overset{\|}{C}}R^*, -OH, -CN, -OR^*, -\overset{O}{\overset{\|}{C}}R^* \text{ or } -COOR^* \text{ group,}$$

where R* is an alkyl group, cycloalkyl group, aryl group or mixed alkyl-aryl group having not more than 18 carbon atoms and $R_3$ has the meaning of an alkylene, arylene or aralkylene group having not more than 18 carbon atoms.

As examples or organic antimony compounds suitable for use in a stabilizer composition according to the present invention may be mentioned: antimony tris(isooctylthioglycolate), antimony tris(isooctyl-β-mercaptopropionate), antimony tris(glycol dimercaptoacetate), dodecylmercapto-antimony bis(isooctyl-thioglycolate).

It has been found that generally favourable results are obtained when the weight ratio between the tin or antimony compounds of group (a) and of the barium compound(s) of group (b) is in the range of 0,05:1 to 3:1, preference being given to a weight ratio between 0,1:1 and 0,3:1.

The stabilizer compositions according to the present invention may be prepared in a simple manner by intermixing the separate ingredients. If desired, additives may previously be incorporated into the stabilizer composition to be mixed later on with the polymer. Alternatively, constituents of the stabilizer mixture and any further additives may be mixed into the polymer mixture separately, for instance during processing.

The stabilizer compositions of the present invention are particularly suitable for improving the thermal stability of any kind of polyvinyl chloride resin irrespective of its method of preparation. In this connection mention is made of solution polymerization, emulsion polymerization and suspension polymerization.

The term polyvinyl chloride as used here not only comprises any kind of homopolymer of vinyl chloride, and post-chlorinated polyvinyl chloride, but also copolymers whose most important constituent is vinyl chloride and a small amount of other copolymerizable monomers, such as copolymers of vinyl chloride and vinyl acetate, copolymers of vinyl chloride and vinylidene chloride, copolymers of vinyl chloride and acrylonitrile, copolymers of vinyl chloride and maleic or fumaric esters and copolymers of vinyl chloride and styrene, and also mixtures containing a high percentage of polyvinyl chloride resin and a low percentage of some other resin, such as chlorinated polyethylene, copolymers of acrylonitrile, butadiene and styrene.

The invention is further described in but not limited by the following examples.

The heat stability figures provided by the examples were obtained as follows. First the various constituents of each specific formulation were mixed on a laboratory two-roll mill at a temperature of 160°C for a period of 4 minutes after gelation. The approximately 1,5 mm thick sheet leaving the roll mill was cut into samples. Heat stability tests were performed in a Heraeus oven equipped with rotating sample trays. Samples were removed from the oven at 10 minute intervals and visually assessed for colour development. The change of colour was taken as a measure of the decomposition rate of the PVC. The results of the experiments are rated from 1 (colourless) to 10 (black).

Example I

The following "rigid" PVC formulation was prepared and tested in the above-described manner:

| | parts by weight |
|---|---|
| PVC (prepared by suspension polymerization; K-value 62) | 100 |
| lubricant (mixed esters) | 1,0 |
| processing aid derived from acrylic acid | 1,0 |
| stabilizer | 1,2 |

The organotin compounds used were:

bis(2-butoxycarbonylethyl)tin bis(2-ethylhexylthioglycolate) = stabilizer A
dioctyl bis(2-ethylhexylthioglycolate) = $Oct_2$ Sn $(2EHTG)_2$
bis(2-n-butoxycarbonylethyl)tinsulphide = $(Bu\ Ac)_2$ Sn S
bis(2-n-butoxycarbonylethyl)tin bis(monomethylmaleate) = $(Bu\ Ac)_2$ Sn $(MMM)_2$
butyltin tris(2-ethylhexylthioglycolate) = Bu Sn $(2\ EHTG)_3$
dibutyltinoxide = $Bu_2$ Sn O
dibutyltindilaurate = $Bu_2$ Sn $(laurate)_2$

In all the cases where the above-mentioned tin compounds were combined with barium bisthioglycolate (Ba $(TG)_2$) the weight ratio was 1 part of barium compound to 0,2 parts of tin compound.

The colour development results obtained during the heat stability test at 185°C are given in the following table.

TABLE I

Comparison of $Ba(TG)_2$ / Organotin mixtures

Stabilizer composition $Ba(TG)_2$ 1,0 } per 100 parts of PVC
Organotin 0,2

Colour Development after stated period at 185°C

| Stabilizer Composition | | Time (min.) | | | | | | | | | | | | | |
|---|---|---|---|---|---|---|---|---|---|---|---|---|---|---|---|
| | | 0 | 10 | 20 | 30 | 40 | 50 | 60 | 70 | 80 | 90 | 100 | 110 | 120 | 130 |
| A | (1,2) | 0 | 0 | 0 | 0 | 0 | 0 | 1 | 10 | | | | | | |
| A<br>$Ba(TG)_2$ | (0,2)+<br>(1,0) | 0 | 0 | 0 | 1 | 2 | 2 | 3 | 3 | 4 | 5 | 7 | 8 | 10 | |
| $Oct_2Sn(2EHTG)_2$ | (1,2) | 0 | 0 | 0 | 1 | 2 | 2 | 3 | 7 | 10 | | | | | |
| $Oct_2Sn(2EHTG)_2$<br>$Ba(TG)_2$ | (0,2)+<br>(1,0) | 0 | 0 | 0 | 0 | 1 | 1 | 2 | 2 | 3 | 4 | 5 | 7 | 9 | 10 |
| $(BuAc)_2SnS$ | (1,2) | 1 | 2 | 2 | 2 | 3 | 3 | 3 | 4 | 6 | 10 | | | | |
| $(BuAc)_2SnS$<br>$Ba(TG)_2$ | (0,2)+<br>(1,0) | 0 | 0 | 0 | 0 | 0 | 0 | 1 | 1 | 2 | 3 | 5 | 7 | 9 | 10 |
| $(BuAc)_2Sn(MMM)_2$ | (1,2) | 2 | 3 | 4 | 7 | 10 | | | | | | | | | |
| $(BuAc)_2Sn(MMM)_2$<br>$Ba(TG)_2$ | (0,2)+<br>(1,0) | 0 | 0 | 0 | 1 | 2 | 2 | 3 | 3 | 4 | 5 | 7 | 8 | 10 | |
| $BuSn(2EHTG)_3$ | (1,2) | 0 | 0 | 0 | 0 | 0 | 0 | 0 | 10 | | | | | | |
| $BuSn(2EHTG)_3$<br>$Ba(TG)_2$ | (0.2)+<br>(1,0) | 0 | 2 | 2 | 3 | 3 | 4 | 5 | 6 | 7 | 9 | 10 | | | |
| $Bu_2SnO$ | (1,2) | 3 | 4 | 7 | 8 | 10 | | | | | | | | | |
| $Bu_2SnO$<br>$Ba(TG)_2$ | (0,2)+<br>(1,0) | 0 | 0 | 0 | 0 | 0 | 0 | 2 | 3 | 6 | 7 | 9 | 10 | | |
| $Bu_2Sn(laurate)_2$ | (1,2) | 0 | 4 | 5 | 6 | 7 | 10 | | | | | | | | |
| $Bu_2Sn(laurate)_2$<br>$Ba(TG)_2$ | (0,2)+<br>(1,0) | 0 | 1 | 1 | 2 | 2 | 3 | 4 | 5 | 6 | 8 | 9 | 10 | | |
| $Ba(TG)_2$ | (1,2) | 2 | 6 | 6 | 6 | 6 | 6 | 7 | 10 | | | | | | |

## Example II

In this example the results are given of a heat stability test at 185°C on antimony tris(2-ethylhexyl thioglycolate) = Sb (2 EHTG)$_3$ and barium bisthioglycolate = Ba(TG)$_2$.

In addition, the results are given of a comparative test on Sb(2EH TG)$_3$ and barium bis(2-ethylhexyl thioglycolate) = Ba(2EHTG)$_2$ and barium thioglycolate = Ba(TG).

The results are given in the table below.

### TABLE II

Comparison of Sb (2EHTG)$_3$ /Ba (2EHTG)$_2$ , Sb(2EHTG)$_3$ /BaTG and Sb(2EHTG)$_3$ /Ba(TG)$_2$ mixtures

Colour Development after stated period at 185°C

| Stabilizer Composition | | Time (min.) | | | | | | | | | | | | | |
|---|---|---|---|---|---|---|---|---|---|---|---|---|---|---|---|
| | | 0 | 10 | 20 | 30 | 40 | 50 | 60 | 70 | 80 | 90 | 100 | 110 | 120 | 130 |
| A<br>Ba(TG)$_2$ | (0,2)<br>(1,0) | 0 | 0 | 1 | 2 | 2 | 3 | 3 | 4 | 5 | 7 | 8 | 10 | | |
| Sb(2EHTG)$_3$ | (1,2) | 0 | 0 | 0 | 0 | 0 | 0 | 0 | 1 | 10 | | | | | |
| Sb(2EHTG)$_3$<br>Ba(2EHTG)$_2$ | (0,2)<br>(1,0) | 2 | 3 | 3 | 4 | 6 | 8 | 9 | 10 | | | | | | |
| Sb(2EHTG)$_3$<br>BaTG | (0,2)<br>(1,0) | 0 | 0 | 0 | 1 | 4 | 6 | 6 | 7 | 7 | 8 | 8 | 9 | 10 | |
| Sb(2EHTG)$_3$<br>Ba(TG)$_2$ | (0.2)<br>(1,0) | 0 | 0 | 1 | 1 | 1 | 1 | 2 | 2 | 3 | 3 | 4 | 7 | 9 | 10 |

The results in the above table clearly show that PVC containing the combination of Sb(2 EHTG)$_3$ with Ba(TG)$_2$ according to the invention is far more stable than that stabilized with the combinations of Sb(2EHTG)$_3$, with BaTG or Ba(2EHTG)$_2$ recommended in United States Patent Specification 4 115 352.

## Example III

In this example the results are given for the organotin stabilizer A of Example I in various weight ratios, use being made of some barium salts according to United States Patent Specification 4 115 352 and barium bisthioglycolate according to the invention. It is clear from this table that the effect of the synergistic action between A and Ba (TG)$_2$ is optimal upon using a fivefold excess of Ba (TG)$_2$.

TABLE III

Comparison of $A/Ba(O_2C.CH_2SH)_2$, $A/Ba\,O_2C.CH_2S$ and $A/Ba(2EHTG)_2$ mixtures.

Colour development after stated period at 185°C

| Stabilizer Composition | | Time (min.) | | | | | | | | | | | | |
|---|---|---|---|---|---|---|---|---|---|---|---|---|---|---|
| | | 0 | 10 | 20 | 30 | 40 | 50 | 60 | 70 | 80 | 90 | 100 | 110 | 120 |
| A | (1,2) | 0 | 0 | 0 | 0 | 0 | 0 | 1 | 10 | | | | | |
| A<br>$Ba(2EHTG)_2$ | (0,6)<br>(0,6) | 2 | 2 | 2 | 2 | 3 | 3 | 5 | 10 | | | | | |
| A<br>$Ba(2EHTG)_2$ | (0,4)<br>(0,8) | 3 | 3 | 3 | 3 | 3 | 5 | 6 | 10 | | | | | |
| A<br>$Ba(2EHTG)_2$ | (0,2)<br>(1,0) | 3 | 3 | 4 | 4 | 5 | 6 | 8 | 9 | 10 | | | | |
| $Ba(2EHTG)_2$ | (1,2) | 5 | 6 | 8 | 9 | 10 | | | | | | | | |
| A<br>Ba TG | (0,6)<br>(0,6) | 0 | 0 | 0 | 1 | 2 | 3 | 5 | 9 | 10 | | | | |
| A<br>Ba TG | (0,4)<br>(0,8) | 0 | 0 | 1 | 2 | 3 | 5 | 6 | 9 | 10 | | | | |
| A<br>Ba TG | (0,2)<br>(1,0) | 0 | 0 | 1 | 3 | 4 | 5 | 6 | 8 | 10 | | | | |
| Ba TG | (1,2) | 1 | 3 | 5 | 6 | 9 | 10 | | | | | | | |
| A<br>$Ba(TG)_2$ | (0,6)<br>(0,6) | 0 | 0 | 0 | 0 | 0 | 1 | 2 | 7 | 8 | 10 | | | |
| A<br>$Ba(TG)_2$ | (0,4)<br>(0,8) | 0 | 0 | 0 | 0 | 1 | 1 | 1 | 2 | 4 | 6 | 8 | 10 | |
| A<br>$Ba(TG)_2$ | (0,2)<br>(1,0) | 0 | 0 | 0 | 1 | 2 | 2 | 3 | 3 | 4 | 5 | 7 | 8 | 10 |
| $Ba(TG)_2$ | (1,2) | 2 | 6 | 6 | 6 | 6 | 6 | 7 | 10 | | | | | |

## Example IV

In this example the following PVC formulation was tested:

| | parts by weight |
|---|---|
| PVC (prepared by suspension polymerization; K value 57) | 100 |
| cetyl/stearyl alcohol | 1,0 |
| polyethylene wax | 0,1 |
| processing aid derived from acrylic acid | 1,0 |
| stabilizer | 1,2 |

For each stabilizer composition the time was measured (in a Brabender Plasticorder) after which the mixture began to degrade.

The results are given in the table below.

TABLE IV

| Stabilizer | | Degradation Time (min) |
|---|---|---|
| A | (1,2) | 14 |
| Ba(2 EHTG)$_2$ | (1,2) | 10 |
| A (0,2) + Ba(2 EHTG)$_2$ | (1,0) | 12 |
| Ba TG | (1,2) | 10 |
| A (0,2) + Ba TG | (1,0) | 16 |
| Ba (TG)$_2$ | (1,2) | 14 |
| A (0,2) + Ba (TG)$_2$ | (1,0) | 18 |

The above table clearly shows that the stabilizer mixture of 0,2 A and 1,0 Ba (TG)$_2$ degraded slowest.

Example V

In this example a comparison is made of combinations of an organotin compound with various barium salts including barium bisthioglycolate. The amount of barium salt was so chosen that the barium content of each composition was equivalent to that of a corresponding Ba(TG)$_2$-containing composition.

The stabilizer compositions were incorporated into the same PVC formulation as given in Example I.

The results are listed in the table below, in which
Ba (Vers)$_2$ stands for barium versatate (13% Ba)
Ba (Nap)$_2$ stands for barium naphthenate (10% Ba)
Ba (TG)$_2$ stands for barium bisthioglycolate (43% Ba).

TABLE V

Comparison of A /Ba(TG)$_2$ with A /Barium soap mixtures at equivalent Ba concentration.

Colour development after stated period at 185°C

| Stabilizer Composition | | Time (min.) | | | | | | | | | | | | |
|---|---|---|---|---|---|---|---|---|---|---|---|---|---|---|
| | | 0 | 10 | 20 | 30 | 40 | 50 | 60 | 70 | 80 | 90 | 100 | 110 | 120 |
| A | (1,2) | 0 | 0 | 0 | 0 | 0 | 0 | 1 | 10 | | | | | |
| A<br>Ba(Vers)$_2$ | (0,2)<br>(3,3) | 2 | 3 | 4 | 5 | 6 | 8 | 10 | | | | | | |
| A<br>Ba(Nap)$_2$ | (0,2)<br>(4,6) | 2 | 2 | 3 | 4 | 5 | 7 | 10 | | | | | | |
| A<br>Ba(TG)$_2$ | (0,2)<br>(1,0) | 0 | 0 | 0 | 1 | 2 | 2 | 3 | 3 | 4 | 5 | 7 | 8 | 10 |
| Ba(Vers)$_2$ | (4,0) | 2 | 5 | 7 | 9 | 10 | | | | | | | | |
| Ba(Nap)$_2$ | (5,5) | 2 | 5 | 5 | 7 | 10 | | | | | | | | |
| Ba(TG)$_2$ | (1,2) | 2 | 6 | 6 | 6 | 6 | 6 | 7 | 10 | | | | | |

## Example VI

In this example the effect is ascertained of alkaline earth bisthioglycolates other than barium. The table below shows that use of $Ba(TG)_2$ and an organotin compound leads to considerably better results than $Sr(TG)_2$ or $Ca(TG)_2$. The change in colour was again determined at 185°C.

TABLE VI

Comparison of A /$M(TG)_2$ mixtures

Colour development after stated period at 185°C

| Stabilizer Composition | | Time (min.) | | | | | | | | | | | | |
|---|---|---|---|---|---|---|---|---|---|---|---|---|---|---|
| | | 0 | 10 | 20 | 30 | 40 | 50 | 60 | 70 | 80 | 90 | 100 | 110 | 120 |
| A | (1,2) | 0 | 0 | 0 | 0 | 0 | 0 | 1 | 10 | | | | | |
| A<br>$Ba(TG)_2$ | (0,2)<br>(1,0) | 0 | 0 | 0 | 1 | 2 | 2 | 3 | 3 | 4 | 5 | 7 | 8 | 10 |
| A<br>$Sr(TG)_2$ | (0,2)<br>(1,0) | 0 | 0 | 2 | 4 | 4 | 4 | 5 | 6 | 6 | 6 | 7 | 8 | 10 |
| A<br>$Ca(TG)_2$ | (0,2)<br>(1,0) | 0 | 1 | 3 | 6 | 7 | 7 | 7 | 8 | 8 | 9 | 10 | | |
| $Ba(TG)_2$ | (1,2) | 2 | 6 | 6 | 6 | 6 | 6 | 7 | 10 | | | | | |
| $Sr(TG)_2$ | (1,2) | 2 | 6 | 6 | 6 | 6 | 7 | 10 | | | | | | |
| $Ca(TG)_2$ | (1,2) | 4 | 7 | 8 | 8 | 8 | 9 | 10 | | | | | | |

## Example VII

In this example it is shown that the use of the stabilizer compositions according to the invention leads to even better results at a thioglycolate to barium ratio lower than 2.

The stabilizer compositions were incorporated into a PVC formulation as indicated in Example I. The colour development at 185°C is given in the table below.

TABLE VII

Comparison of A /$Ba(TG)_n$ mixtures ($n=1 \rightarrow 2$)

Colour developed after stated period at 185°C

| Stabilizer Composition | | Time (min.) | | | | | | | | | | |
|---|---|---|---|---|---|---|---|---|---|---|---|---|
| | | 0 | 10 | 20 | 30 | 40 | 50 | 60 | 70 | 80 | 90 | 100 |
| A | (1,2) | 0 | 0 | 0 | 0 | 0 | 0 | 1 | 10 | | | |
| A<br>Ba TG | (0,6)<br>(0,6) | 0 | 0 | 0 | 1 | 2 | 3 | 5 | 9 | 10 | | |
| A<br>$Ba(TG)_{1,3}$ | (0,6)<br>(0,6) | 0 | 0 | 0 | 0 | 0 | 1 | 2 | 7 | 8 | 10 | |
| A<br>$Ba(TG)_{1,6}$ | (0,6)<br>(0,6) | 0 | 0 | 0 | 0 | 0 | 0 | 1 | 5 | 8 | 10 | |
| A<br>$Ba(TG)_2$ | (0,6)<br>(0,6) | 0 | 0 | 0 | 0 | 0 | 1 | 2 | 7 | 8 | 10 | |

Example VIII

In this example the results are given of a heat stability test at 185°C on a combination of barium bisthiolactate and the organotin stabilizer A of Example I.

In addition, the results are given of comparative tests on stabilizer A and barium bisthiolactate, respectively.

The stabilizer compositions were incorporated into the same PVC formulation as given in Example I.

The results are listed in the table below, in which $Ba(Tl)_2$ stands for barium bisthiolactate.

TABLE VIII

Colour developed after stated period at 185°C time (min)

| Stabilizer Composition | | Time (min.) | | | | | | | | | | | | |
|---|---|---|---|---|---|---|---|---|---|---|---|---|---|---|
| | | 0 | 10 | 20 | 30 | 40 | 50 | 60 | 70 | 80 | 90 | 100 | 110 | 120 |
| A | (1,2) | 0 | 0 | 0 | 0 | 0 | 0 | 1 | 10 | | | | | |
| A<br>$Ba(Tl)_2$ | (0,2)<br>(1,0) | 0 | 0 | 1 | 1 | 1 | 2 | 2 | 3 | 5 | 8 | 10 | | |
| $Ba(Tl)_2$ | (1,2) | 2 | 3 | 5 | 5 | 6 | 9 | 10 | | | | | | |

**Claims**

1. A heat stabilizer composition for stabilizing polymers or copolymers of vinyl chloride comprising a mixture of

(a) an organotin compound or an antimony mercaptide, and

(b) a synergistic amount of a compound derived from barium and a thiocarboxylic acid of the formula HSC ($R_1$) ($R_2$) COOH, where $R_1$ represents a H-atom or a methyl group and $R_2$ represents a H-atom or a substituted or unsubstituted alkyl group having from 1 to 18 carbon atoms, a cycloalkyl group having 3 to 6 carbon atoms or a phenyl group,

characterized in that compound (b) is the barium bisthiocarboxylate of said acid and that the weight ratio between the compound(s) of group (a) and of the barium compound(s) of group (b) is in the range of 0,05:1 to 3:1.

2. A stabilizer composition according to claim 1, characterized in that the weight ratio between the compound(s) of group (a) and of the barium compound(s) of group (b) is in the range of 0,1:1 to 0,3:1.

3. A stabilizer composition according to claim 1, characterized in that in addition to compound (b) it contains a barium S,O-thiocarboxylate derived from said acid in an amount such that the molar ratio of thiocarboxylate to barium is at least 1,3.

4. A stabilizer composition according to claim 3, characterized in that the molar ratio of thiocarboxylate to barium is in the range of 1,5 to 1,7.

5. A stabilizer composition according to one or more of the preceding claims, characterized in that the organotin compound corresponds to the formula:

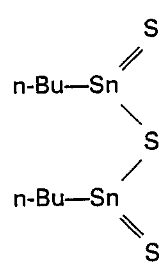

$R_x$—Sn—$Z_{(4-x)}$, where x is 1 or 2, Z represents —$S(CH_2)_nCOOR^*$ where n = 1 or 2,

$—O\underset{\underset{O}{\|}}{C}CH=CH\underset{\underset{O}{\|}}{C}—OR^*$, $—O\underset{\underset{O}{\|}}{C}R$ or —SR,

or $R_2$—Sn = Z* wherein Z* is

—O—, $—O\underset{\underset{O}{\|}}{C}CH=CH\underset{\underset{O}{\|}}{C}O—$, —S—, or —$S(CH_2)_2COO$—,

where R represents an alkyl, cycloalkyl, aryl or mixed alkyl-aryl group having not more than 18 carbon atoms which may be substituted or not with one or more of the following groups:

$$—OH, —CN, —OR^*, —\overset{\overset{O}{\|}}{C}R^*, \text{ or } —COOR^*,$$

where R* represents an alkyl, cycloalkyl, aryl or mixed alkyl-aryl group having not more than 18 carbon atoms.

6. A stabilizer composition according to one or more of the claims 1—4, characterized in that the organotin compound corresponds to one of the following formulae:

( I )

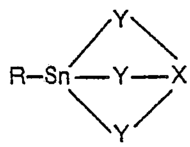

( II )

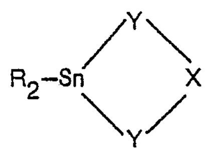

( III )

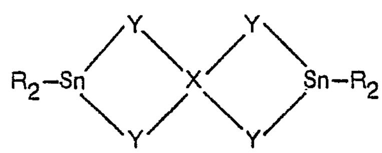

( IV )

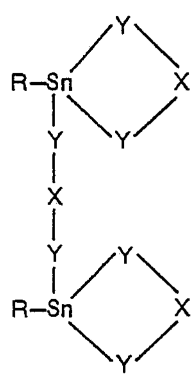

wherein R is an alkyl group, a cycloalkyl group, an aryl group, an aralkyl group or an alkaryl group having not more than 18 carbon atoms, Y represents oxygen or sulphur and X is the rest of a polyol or polyhydric phenol having 2 to 6 hydroxyl groups after removal of one or more hydroxyl groups, the group R being substituted or not with one or more of the following groups:

$$—OH, —CN, —OR^*, —\overset{\overset{O}{\|}}{C}R^*, \text{ or } —COOR^*,$$

wherein R* is an alkyl group, cycloalkyl group, aryl group or mixed alkyl-aryl group having not more than 18 carbon atoms.

7. A stabilizer composition according to one or more of the claims 1—4, characterized in that the organotin compound corresponds to the formula:

$$(R_1—O—\overset{\overset{O}{\|}}{C}—CH_2CH_2)_n—Sn\ X_{4-n},$$

where n = 1 or 2 and $R_1$ represents an alkyl group having 1 to 18 carbon atoms that may optionally be

substituted with an alkoxygroup having 1 to 18 carbon atoms, a polyoxyalkylene group consisting of oxyalkylene groups having 1—4 carbon atoms and as a terminal group alkyl or a hydrogen atom, a cycloalkyl group having 3 to 6 carbon atoms, an alkenyl group having 2 to 4 carbon atoms, or a phenyl group, and wherein X stands for

$\frac{1}{2}$ S, $—SR_2$, $—S(CH_2)_m—COO—R_3$, $—OC—CH=CH—C—OR_3$, $—OC—R_3$
(each C in the last two groups shown with =O: ‖ O)

or $—S(CH_2)_m—O—CO—R_3$, wherein m = 1 or 2 and $R_2$ represents an unsubstituted or substituted alkyl, cycloalkyl, aryl, alkaryl or aralkyl group, and $R_3$ has the meaning of an unsubstituted or substituted alkyl, alkenyl, aryl, alkaryl, or aralkyl group, with the proviso that n = 2 when X = $\frac{1}{2}$ S.

8. A stabilizer composition according to one or more of the claims 1—4, characterized in that the organo-antimony sulphur compound corresponds to the formula: Sb $X_3$ has the meaning of sulphur, $SR_1$ or $SR_3COOR_2$, wherein $R_1$ and $R_2$ have the meaning of an alkyl, alkenyl, alkynyl, aryl, cycloalkyl, cycloalkenyl or mixed aryl-alkyl group having not more than 18 carbon atoms, which may optionally still be substituted with a halogen atom or a

$—OCR^*$, —OH, —CN, $—OR^*$ $—CR^*$ or $—COOR^*$ group,
(C in $—OCR^*$ and $—CR^*$ shown with =O: O ‖)

where R* is an alkyl group, cycloalkyl group, aryl group or mixed alkyl-aryl group having not more than 18 carbon atoms and $R_3$ has the meaning of an alkylene, arylene or aralkylene group having not more than 18 carbon atoms.

9. Polymers or copolymers vinyl chloride containing per 100 parts by weight of polymer of from 0,05 to 3 parts by weight of a stabilizer composition according to one or more of the preceding claims.

10. Use of polymers or copolymers according to claim 9 for the production of shaped articles entirely or partly composed thereof.

**Patentansprüche**

1. Eine Wärmestabilisatorzusammensetzung zur Stabilisierung von Polymerisaten oder Copolymerisaten von Vinylchlorid enthaltend eine Mischung aus

(a) einer Organozinn -Verbindung oder eines Antimonmercaptids, und

(b) einer synergistischen Menge einer Verbindung, abgeleitet von Barium und einer Thiocarbonsäure der Formel $HSC(R_1)(R_2)COOH$, in welcher $R_1$ ein Wasserstoffatom oder eine Methylgruppe und $R_2$ ein Wasserstoffatom oder eine substituierte oder unsubstituierte Alkylgruppe mit 1 bis 18 Kohlenstoffatomen, eine Cycloalkylgruppe mit 3 bis 6 Kohlenstoffatomen oder eine Phenylgruppe darstellt,

dadurch gekennzeichnet, daß die Verbindung (b) das Barium-bisthiocarboxylat der genannten Säure ist und daß das Gewichtsverhältnis zwischen der(n) Verbindung(en) der Gruppe (a) und der(n) Bariumverbindung(en) der Gruppe (b) im Bereich von 0,05:1 bis 3:1 liegt.

2. Eine Stabilisatorzusammensetzung gemäß Anspruch 1, dadurch gekennzeichnet, daß das Gewichtsverhältnis zwischen der(den) Verbindung(en) der Gruppe (a) und der(den) Bariumverbindung(en) der Gruppe (b) im Bereich von 0,1:1 zu 0,3:1 liegt.

3. Eine Stabilisatorzusammensetzung gemäß Anspruch 1, dadurch gekennzeichnet, daß sie zusätzlich zu der Verbindung (b) ein Barium-S,O-thiocarboxylat, abgeleitet von der genannten Säure, in einer Menge enthält, daß das molare Verhältnis von Thiocarboxylat zu Barium mindestens 1,3 beträgt.

4. Eine Stabilisatorzusammensetzung gemäß Anspruch 3, dadurch gekennzeichnet, daß das molare Verhältnis von Thiocarboxylat zu Barium im Bereich von 1,5 bis 1,7 liegt.

5. Eine Stabilisatorzusammensetzung gemäß einem oder mehreren der vorstehenden Ansprüche, dadurch gekennzeichnet, daß die Organozinn-verbindung der Formel

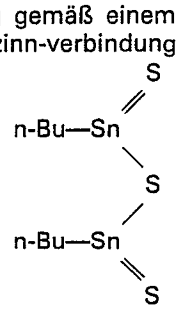

$R_x—Sn—Z_{(4-x)}$ entspricht, in welcher X den Wert 1 oder 2 hat, Z eine Gruppe $—S(CH_2)_nCOOR^*$ darstellt, wobei n = 1 oder 2 ist, oder eine Gruppe

$—OCCH=CHC—OR^*$, $—OCR$ oder —SR,
(each C shown with =O: ‖ O)

ist, oder $R_2$—Sn = Z*, wobei Z*

—O—, —OCCH=CHCO—, —S—, oder —$S(CH_2)_2COO$—,
‖ ‖
O O

bedeutet, in welchen Gruppen R Alkyl, Cycloalkyl, Aryl oder eine gemischte Alkyl-Arylgruppe mit nicht mehr als 18 Kohlenstoffatomen darstellt, welche gegebenenfalls durch eine oder mehrere der folgenden Gruppen substituiert sein können

O
‖
—OH, —CN, —OR*, —CR*, oder —COOR*,

wobei R* eine Alkyl-, Cycloalkyl-, Aryl- oder gemischte Alkyl-Arylgruppe mit nicht mehr als 18 Kohlenstoffatomen ist.

6. Eine Stabilisatorzusammensetzung gemäß einem oder mehreren der Ansprüche 1 bis 4, dadurch gekennzeichnet, daß die Organozinn- Verbindung den folgenden Formeln entspricht:

(I)

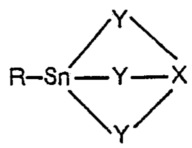

(II)

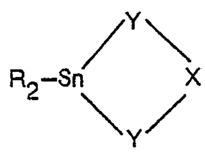

(III)

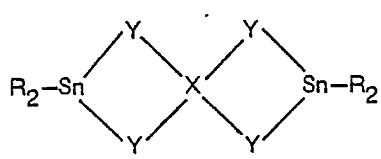

(IV)

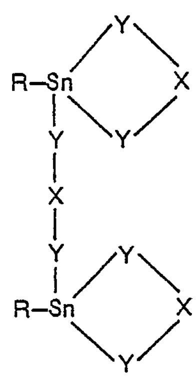

in welchen R eine Alkylgruppe, eine Cycloalkylgruppe, eine Arylgruppe, eine Aralkylgruppe oder eine Alkarylgruppe mit nicht mehr als 18 Kohlenstoffatomen ist, Y Sauerstoff oder Schwefel bedeutet und X der Rest eines Polyols oder eines mehrwertigen Phenols mit 2 bis 6 Hydroxylgruppen nach Entfernen einer oder mehrerer Hydroxylgruppen ist, wobei R gegebenenfalls durch eine oder mehrere der folgenden Gruppen substituiert ist:

O
‖
—OH, —CN, —OR*, —CR* oder —COOR*,

wobei R* eine Alkylgruppe eine Cycloalkyl-, Aryl- oder gemischte Alkyl-Arylgruppe mit nicht mehr als 18 Kohlenstoffatomen bedeutet.

7. Eine Stabilisatorzusammensetzung gemäß einem oder mehreren der Ansprüche 1 bis 4, dadurch gekennzeichnet, daß die Organozinn- Verbindung der Formel

$$(R_1{-}O{-}\overset{\overset{O}{\|}}{C}{-}CH_2CH_2)_n{-}SnX_{4-n}$$

entspricht, in welcher n den Wert 1 oder 2 hat und $R_1$ eine Alkylgruppe mit 1 bis 18 Kohlenstoffatomen, die gegebenenfalls durch eine Alkoxygruppe mit 1 bis 18 Kohlenstoffatomen substituiert sein kann, eine Polyoxyalkylengruppe bestehend aus Oxyalkylengruppen mit 1 bis 4 Kohlenstoffatomen und Alkyl oder einem Wasserstoffatom als endständiger Gruppe, eine Cycloalkylgruppe mit 3 bis 6 Kohlenstoffatomen, eine Alkenylgruppe mit 2 bis 4 Kohlenstoffatomen, oder eine Phenylgruppe bedeutet, und in welcher X

$$\tfrac{1}{2}\,S,\ {-}SR_2,\ {-}S(CH_2)_m{-}COO{-}R_3,\ {-}O\underset{\underset{O}{\|}}{C}{-}CH{=}CH{-}\underset{\underset{O}{\|}}{C}{-}OR_3,\ {-}O\underset{\underset{O}{\|}}{C}{-}R_3$$

oder $-S(CH_2)_m-O-CO-R_3$ ist, wobei m den Wert 1 oder 2 hat und $R_2$ eine unsubstituierte oder substituierte Alkyl-, Cycloalkyl-, Aryl-, Alkaryl- oder Aralkylgruppe darstellt, und $R_3$ die Bedeutung einer substituierten oder unsubstituierten Alkyl-, Alkenyl-, Aryl-, Alkaryl- oder Aralkylgruppe hat, mit der Maßgabe, daß n den Wert 2 hat, wenn X $\tfrac{1}{2}$ S ist.

8. Eine Stabilisatorzusammensetzung gemäß einem oder mehreren der Ansprüche 1 bis 4, dadurch gekennzeichnet, daß die Organo-Antimonschwefelverbindung der Formel $Sb\,X_3$ entspricht, wobei X Schwefel, $SR_1$ oder $SR_3COOR_2$ bedeutet, wobei $R_1$ und $R_2$ eine Alkyl-, Alkenyl-, Alkynyl-, Aryl-, Cycloalkyl-, Cycloalkenyl-, oder gemischte Aryl-Alkylgruppe mit nicht mehr als 18 Kohlenstoffatomen darstellen, welche gegebenenfalls noch mit einem Halogenatom oder Gruppe

$$-O\overset{\overset{O}{\|}}{C}R^*,\ -OH,\ -CN,\ -OR^*\ -\overset{\overset{O}{\|}}{C}R^*\ \text{oder}\ -COOR^*$$

substituiert sind, in welcher R* eine Alkylgruppe, Cycloalkylgruppe, Arylgruppe oder gemischte Alkyl-Arylgruppe mit nicht mehr als 18 Kohlenstoffatomen darstellt und $R_3$ die Bedeutung einer Alkylen-, Arylen- oder Aralkylengruppe mit nicht mehr als 18 Kohlenstoffatomen hat.

9. Polymerisate oder Mischpolymerisate von Vinylchlorid enthaltend von 0,05 bis 3 Gewichtsteile einer Stabilisatorzusammensetzung nach einem oder mehreren der vorstehenden Ansprüche pro 100 Gewichtsteile des Polymers.

10. Verwendung von Polymerisaten oder Mischpolymerisaten gemäß Anspruch 9 zur Herstellung von teilweise oder ganz daraus bestehenden geformten Artikeln.

**Revendications**

1. Composition stabilisante à la chaleur pour stabiliser des polymères ou des copolymères de chlorure de vinyle, comprenant un mélange de:

(a) un composé d'organo-étain ou un mercaptide d'antimoine et

(b) une proportion synergique d'un composé dérivé du baryum et d'un acide thiocarboxylique de formule HSC $(R_1)$ $(R_2)$ COOH dans laquelle $R_1$ représente un atome d'hydrogène ou un radical méthyle et $R_2$ représente un atome d'hydrogène ou un radical alkyle substitué ou non substitué contenant 1 à 10 atomes de carbone, un radical cycloalkyle de 3 à 6 atomes de carbone ou un radical phényle,

caractérisé en ce que le composé (b) est le bisthiocarboxylate de baryum dudit acide et en ce que le rapport pondéral entre le ou les composé(s) du groupe (a) et les composés de baryum du groupe (b) est compris entre 0,05:1 et 3:1.

2. Composition stabilisante selon la revendication 1, caractérisée en ce que le rapport pondéral du ou des composés du groupe (a) et le ou les composé(s) de baryum du groupe (b) est compris entre 0,1:1 et 0,3:1.

3. Composition stabilisante selon la revendication 1, caractérisée en ce qu'en plus du composé (b) elle contient un S,O-thiocarboxylate de baryum dérivé dudit acide en une quantité telle que le rapport molaire du thiocarboxylate au baryum est d'au moins 1,3.

4. Composition stabilisante selon la revendication 3, caractérisée en ce que le rapport molaire du thiocarboxylate au baryum est compris entre 1,5 et 1,7.

5. Composition stabilisante selon l'une ou plusieurs des revendications précédentes, caractérisée en ce que le composé d'organoétain répond à la formule:

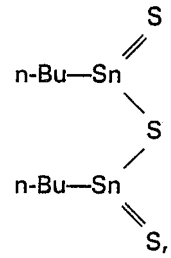

$R_x$—Sn—$Z_{(4-x)}$, dans laquelle x est 1 ou 2, Z représente —$S(CH_2)_nCOOR^*$ dans laquelle n = 1 ou 2,

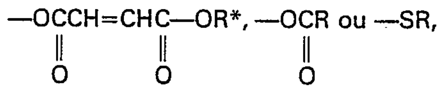

ou $R_2$—Sn = Z* dans laquelle Z* est

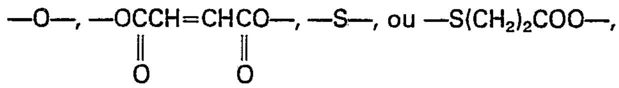

où R représente un radical alkyle, cycloalkyle, aryle ou alkyle-aryle mélangés ne contenant pas plus de 18 atomes de carbone et pouvant être non substitué ou substitué par l'un des radicaux suivants:

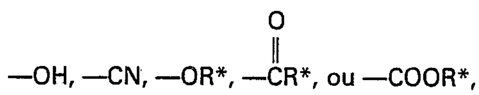

dans lesquels R* représente un groupe alkyle, cycloalkyle, aryle ou alkyle-aryle mélangés ne contenant pas plus de 18 atomes de carbone.

6. Composition stabilisante selon une ou plusieurs des revendications 1 à 4, caractérisée en ce que le composé d'organo-étain répond à l'une des formules suivantes:

(I) 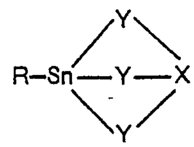

(II) 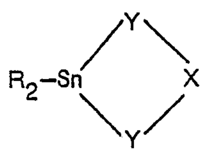

(III) 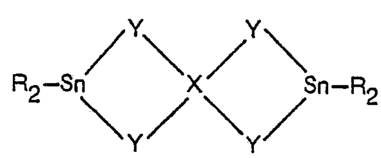

(IV) 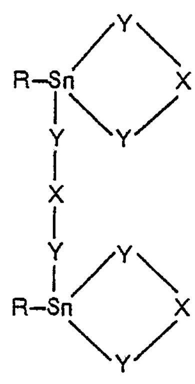

dans lesquelles R est un radical alkyle, cycloalkyle, aryle, aralkyle ou alcaryle ne contenant pas plus de 18 atomes de carbone, Y représente un atome d'oxygène ou de soufre et X est le reste d'un polyol ou d'un polyphénol contenant 2 à 6 groupes hydroxyliques après l'enlèvement d'un ou plusieurs groupes hydroxyliques, le radical R n'étant pas substitué ou étant substitué par un ou plusieurs des groupes suivants:

$$-OH,\ -CN,\ -OR^*,\ -\overset{\overset{\displaystyle O}{\|}}{C}R^*\ \text{ou}\ -COOR^*,$$

dans lesquels R* est un radical alkyle, cycloalkyle, aryle ou alkyle-aryle mélangés ne contenant pas plus de 18 atomes de carbone.

7. Composition stabilisante selon une ou plusieurs des revendications 1 à 4, caractérisée en ce que le composé d'organo-étain répond à la formule:

$$(R_1-O-\overset{\overset{\displaystyle O}{\|}}{C}-CH_2CH_2)_n-Sn\ X_{4-n}$$

dans laquelle n = 1 ou 2 et $R_1$ représente un radical alkyle de 1 à 18 atomes de carbone qui peut être facultativement substitué par un radical alcoxy contenant 1 à 18 atomes de carbone, un radical polyoxyalkylène constitué de groupes oxyalkylène contenant 1 à 4 atomes de carbone et à titre de groupe terminal un radical alkyle ou un atome d'hydrogène, un radical cycloalkyle de 3 à 6 atomes de carbone, alcényle de 2 à 4 atomes de carbone ou phényle, et dans laquelle X représente:

$$\tfrac{1}{2}\,S,\ -SR_2,\ -S(CH_2)_m-COO-R_3,\ -O\underset{\underset{\displaystyle O}{\|}}{C}-CH{=}CH-\underset{\underset{\displaystyle O}{\|}}{C}-OR_3,\ -O\underset{\underset{\displaystyle O}{\|}}{C}-R_3$$

ou $-S(CH_2)_m-O-CO-R_3$, dans lequel m est 1 ou 2 et $R_2$ représente un radical alkyle, cycloalkyle, aryle, alcaryle ou aralkyle non substitué ou substitué alors que $R_3$ représente un radical alkyle, alcényle, aryle, alcaryle ou aralkyle non substitué ou substitué à la condition que n = 2 quand X = ½ S.

8. Composition stabilisante selon une ou plusieurs des revendications 1 à 4, caractérisée en ce que le composé sulfuré organique d'antimoine répond à la formule: Sb $X_3$ dans laquelle X représente le soufre, $SR_1$ ou $SR_3COOR_2$, dans lequel $R_1$ et $R_2$ désignent chacun un radical alkyle, alcényle, alkynyle, aryle, cycloalkyle, cycloalcényle ou aryle-alkyle mélangés ne contenant pas plus de 18 atomes de carbone, pouvant être facultativement substitué par un atome d'halogène ou un groupe:

$$-O\overset{\overset{\displaystyle O}{\|}}{C}R^*,\ -OH,\ -CN,\ -OR^*\ -\overset{\overset{\displaystyle O}{\|}}{C}R^*\ \text{ou}\ -COOR^*$$

dans laquel R* est un radical alkyle, cycloalkyle, aryle, ou alkyle-aryle mélangés ne contenant pas plus de 18 atomes de carbone et $R_3$ désigne un radical alkylène, arylène ou aralkylène ne contenant pas plus de 18 atomes de carbone.

9. Polymères ou copolymères de chlorure de vinyle contenant pour 100 parties en poids du polymère, de 0,05 à 3 parties en poids d'une composition stabilisante selon une ou plusieurs des revendications précédentes.

10. Utilisation des polymères ou copolymères selon la revendication 9 pour la production d'articles façonnés composés en totalité ou en partie de ceux-ci.